# FASCICULE DE BREVET EUROPEEN

(11) **EP 3 255 732 B1**
(45) Date de publication et mention de la délivrance du brevet: **04.12.2019**
(21) Numéro de dépôt: 17170402.6
(22) Date de dépôt: 10.05.2017
(51) Int. Cl.: H01R 4/24, H01R 4/2466, H01R 4/2433

(54) **BORNE DE CONNEXION ELECTRIQUE COMPORTANT UN LEVIER DE CONNEXION ET APPAREILLAGE ELECTRIQUE ASSOCIE**
ELEKTRISCHE VERBINDUNGSKLEMME, DIE EINEN VERBINDUNGSHEBEL UMFASST, UND ENTSPRECHENDE ELEKTRISCHE GERÄTE
ELECTRICAL CONNECTION TERMINAL COMPRISING A CONNECTION LEVER AND ASSOCIATED ELECTRICAL SWITCHGEAR

(30) Priorité: 10.06.2016 FR 1655381
(43) Date de publication de la demande: 13.12.2017
(73) Titulaire: Legrand France, 87000 Limoges (FR); Legrand SNC, 87000 Limoges (FR)
(72) Inventeur: CAILLE, Jean-Loup, 87520 Veyrac (FR); LONGEVILLE, Jérome, 87350 Panazol (FR); CHAUMENY, Jean-Luc, 87590 Saint Just Le Martel (FR)
(74) Mandataire: Jacobacci Coralis Harle

(56) Documents cités:
- WO-A1-2016/087799
- CN-U- 205 122 790

## Description

### DOMAINE TECHNIQUE AUQUEL SE RAPPORTE L'INVENTION

La présente invention concerne de manière générale le domaine des bornes de connexion électrique.

Elle concerne également un appareillage électrique comportant un socle isolant et au moins une borne de connexion électrique telle que précitée, fixée audit socle isolant.

L'invention trouve une application particulièrement avantageuse dans la réalisation d'une boîte électrique prévue pour loger un mécanisme électrique du type interrupteur, va-et-vient, variateur électrique, prise de courant, prise réseau (RJ45), prise de téléphone (RJ11), voyant, détecteur (de fumée, d'inondation, de température, de mouvement ou de lumière)...

### ARRIERE-PLAN TECHNOLOGIQUE

Traditionnellement, la fixation et la connexion d'un fil électrique gainé s'effectue à l'aide d'une borne à vis, laquelle consiste en un feuillard métallique dans lequel est vissée une vis. Cette vis est alors prévue pour comprimer l'extrémité dénudée du fil électrique sur le feuillard métallique afin d'établir la connexion électrique.

Actuellement, il existe aussi des bornes sans vis, dans lesquelles cette dernière est remplacée par un élément de compression prévu pour maintenir le fil électrique et établir la connexion électrique.

Parmi ces bornes, il en existe dont l'élément de compression se présente sous la forme d'un levier de connexion, adapté à comprimer le fil électrique contre le feuillard métallique.

On connaît notamment du document WO2007128380 un appareillage électrique comprenant une telle borne de connexion électrique.

Dans cet appareillage électrique, le levier de connexion forme un couvercle articulé sur un socle isolant de cet appareillage électrique sur lequel est montée la borne de connexion.

Ce levier de connexion est à cet effet monté pivotant autour dudit axe de bascule, cet axe étant reçu par ledit socle isolant. Les fils conducteurs doivent alors être insérés entre l'axe de bascule et le socle isolant pour pénétrer dans la borne de connexion associée.

Cependant, l'insertion du fil conducteur sous l'axe de bascule du levier de connexion est relativement fastidieuse à réaliser. L'accès aux bornes de connexion décrites dans ce document est peu aisé.

On connaît également du document DE19700600 une borne de connexion conforme au préambule de la revendication 1.

Le document CN 205122790 U dévoile un connecteur électrique muni d'une partie de support interagissant avec une partie de connexion, la connexion électrique étant réalisée via un levier de connexion présentant des moyens d'accostage sur un support de câbles électriques.

### OBJET DE L'INVENTION

Afin de remédier à l'inconvénient précité de l'état de la technique, la présente invention propose une nouvelle borne de connexion présentant un accès facilité.

Plus particulièrement, on propose selon l'invention une borne de connexion électrique telle que décrite en introduction, conforme à la revendication 1.

Ainsi, la fente de réception s'étend sur toute sa longueur au-dessus de l'axe de bascule du levier de connexion.

Le lieu de positionnement de chaque conducteur électrique dans la borne électrique, qui correspond au lieu théorique d'accueil du conducteur électrique, s'étend au-dessus de l'axe de bascule, et ce quel que soit le degré d'enfoncement de ce conducteur dans la fente de réception correspondante.

On entend par « au-dessus de l'axe de bascule », un lieu qui est disposé entre l'axe de bascule et l'installateur lors de l'utilisation de la borne de connexion.

Le terme « au-dessus » implique que la fente est orientée vers l'installateur et accessible à celui-ci.

Elle se trouve ainsi plus proche de la partie avant de l'appareillage électrique dans lequel la borne de connexion est installée que l'axe de bascule.

Chaque conducteur électrique peut ainsi être inséré dans la borne de connexion selon l'invention en le faisant passer au-dessus de l'axe de rotation du levier de connexion. L'insertion de ce conducteur dans la borne de connexion correspondante est alors beaucoup plus simple. La partie d'actionnement du levier de connexion vient au contact du conducteur électrique du côté de ce fil qui est opposé à l'axe de bascule du levier de connexion. Le lieu de positionnement de chaque conducteur électrique passe en effet entre l'axe de bascule et la partie d'actionnement du levier de connexion.

En outre, grâce à la borne selon l'invention, bien que l'axe de bascule du levier de connexion s'étende orthogonalement à l'axe de positionnement du lieu de positionnement du conducteur électrique, ce lieu de positionnement traverse la borne de connexion. En d'autres termes, le levier de connexion ne délimite pas, même partiellement, ledit lieu de positionnement du conducteur électrique.

Ainsi, le conducteur électrique peut traverser librement la borne de connexion, le levier de connexion ne bloquant pas le cheminement de ce conducteur.

On peut même envisager de connecter le conducteur à la borne d'un côté ou de l'autre de celle-ci, c'est-à-dire en amenant le conducteur en question près de la borne de connexion d'un côté ou de l'autre de la fente de réception.

D'autres caractéristiques non limitatives et avantageuses de la borne de connexion électrique conforme à l'invention sont énoncées dans les revendications 2 à 5.

L'invention concerne également un appareillage électrique comportant un socle isolant et au moins une borne de connexion électrique, qui est fixée audit socle isolant.

D'autres caractéristiques non limitatives et avantageuses de la borne de connexion électrique conforme à l'invention sont énoncées dans les revendications 6 à 11.

### DESCRIPTION DETAILLEE D'UN EXEMPLE DE RÉALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective éclatée d'un appareillage électrique selon un premier mode de réalisation de l'invention et d'une boîte associée,
- la figure 2 est une vue schématique en perspective avant de l'appareillage électrique de la figure 1 assemblé,
- la figure 3 est une vue schématique de dessus du socle de l'appareillage électrique de la figure 1 muni de ses bornes de connexion électrique, le levier de connexion de l'une des bornes étant dans une première position de libération des conducteurs électriques ;
- la figure 4 est une vue schématique en coupe selon le plan A-A de la figure 3 ;
- la figure 5 est une vue schématique en perspective du socle d'un deuxième mode de réalisation de l'appareillage électrique selon l'invention muni de ses bornes de connexion électrique, le levier de connexion de l'une des bornes étant dans une deuxième position de connexion des conducteurs électriques ;
- la figure 6 est une vue schématique éclatée de l'appareillage électrique de la figure 5,
- les figures 7 et 8 sont des vues schématiques de profil et avant de l'appareillage de la figure 3, le levier de connexion étant dans une première position intermédiaire entre ses positions de libération et de connexion;
- les figures 9 et 10 sont des vues schématiques de profil et avant de l'appareillage de la figure 3, le levier de connexion étant dans une deuxième position intermédiaire entre ses positions de libération et de connexion;
- les figures 11 et 12 sont des vues schématiques de profil et avant de l'appareillage de la figure 3, le levier de connexion étant dans sa position de connexion;
- les figures 13 et 14 sont des vues schématiques partielles en perspective vue de dessus et de dessous d'une partie du socle de l'appareillage de la figure 11 ;
- les figures 15 à 19 sont des vues en perspectives vues sous différents angles du levier de connexion de l'appareillage électrique des figures précédentes.

En préliminaire, on notera que les éléments identiques ou similaires des différentes variantes de réalisation de l'invention représentés sur les différentes figures seront, dans la mesure du possible, référencés par les mêmes signes de référence et ne seront pas décrits à chaque fois.

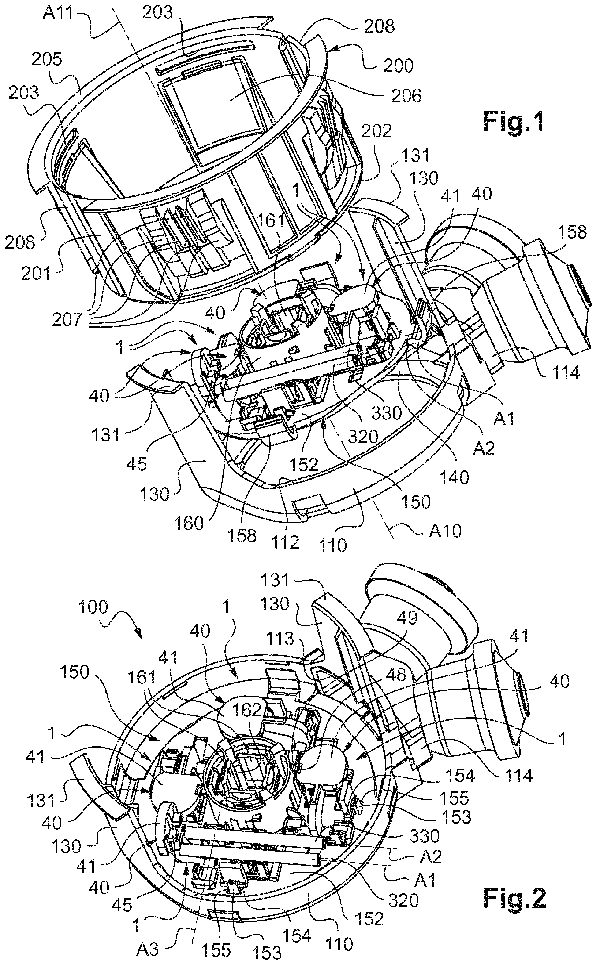

Sur les figures 1 et 2, on a représenté un appareillage électrique 100 équipé de bornes de connexion électrique 1.

Il pourrait s'agir d'une boîte électrique équipée dans son fond de bornes de connexion électrique. Il pourrait notamment s'agir d'une boîte de dérivation.

Ici, il s'agit plutôt d'un étrier 100 à rapporter à l'arrière d'une boîte électrique 200 (voir figure 1).

Une telle boîte électrique 200 est prévue pour loger un module ou un mécanisme électrique assurant une fonction électrique quelconque (interrupteur, prise de courant, ...).

L'étrier 100 a alors pour fonction de faciliter la connexion de conducteurs électriques, en l'espèce des fils électriques 320, 330 gainés, au module ou au mécanisme électrique logé dans la boîte électrique 200.

Telle qu'elle apparaît sur la figure 1, la boîte électrique 200 est du type à encastrer dans une cavité pratiquée dans une cloison creuse. On rappelle à ce sujet que, de manière connue, une telle cloison creuse est généralement composée d'un treillage métallique (formé de montants verticaux et de rails horizontaux) et de panneaux de plâtre rapportés sur l'une au moins des deux faces du treillage métallique. La cavité pratiquée dans cette cloison creuse pour accueillir la boîte électrique 200 est alors simplement formée par une ouverture circulaire réalisée à la scie cloche dans l'un des panneaux de plâtre.

Dans la description, les termes « avant » et « arrière » seront utilisés par rapport à la direction du regard de l'installateur de l'étrier 100 et de la boîte électrique 200 dans le panneau de plâtre. Ainsi, les termes avant et arrière désigneront respectivement le lieu tourné vers l'extérieur de la cloison creuse et le lieu tourné vers l'intérieur de cette cloison creuse.

Les fils électriques 320, 330 à connecter à l'étrier 100 cheminent à l'intérieur de la cloison creuse, au travers de gaines de cheminement (non représentées). Il peut également s'agir de câbles électriques.

Ainsi, une première gaine de cheminement est tirée entre les deux panneaux de plâtre de la cloison creuse. Les fils électriques 320 qui courent dans cette première gaine de cheminement permettent d'alimenter en courant le module ou mécanisme électrique. Ils sont pour cela prévus pour se connecter aux bornes de connexion électrique 1 de l'étrier 100.

Le module ou mécanisme électrique logé dans la boîte électrique 200 est pour sa part adapté à se connecter à ces mêmes bornes de connexion électrique 1, au moyen de broches électriques, comme décrit ultérieurement.

Il arrive également que l'on souhaite connecter un second module ou mécanisme électrique, logé dans une autre boîte électrique, en parallèle du module ou mécanisme électrique considéré (on parle alors de « repiquage »).

Pour cela, une seconde gaine de cheminement est tirée entre les deux panneaux de plâtre de la cloison creuse, depuis l'une jusqu'à l'autre des deux boîtes électriques. Les fils électriques 330 qui courent dans cette seconde gaine de cheminement sont alors conçus pour alimenter en courant le second module ou mécanisme électrique.

Chaque borne de connexion électrique 1 de l'étrier 100 doit alors non seulement permettre la connexion de l'un des fils électriques 320 courant dans la première gaine de cheminement, mais également la connexion de l'un des fils électriques 330 courant dans la seconde gaine de cheminement.

L'invention porte plus précisément sur les bornes de connexion électrique 1 de l'étrier 100, qui sont d'un accès particulièrement aisé et facilitent la connexion de chacun des deux fils électriques 320, 330 distincts.

Ici, les bornes de connexion électrique 1 équipant l'étrier 100 sont toutes identiques. En référence aux figures 1 à 14, on ne décrira donc en détail que l'une de ces bornes.

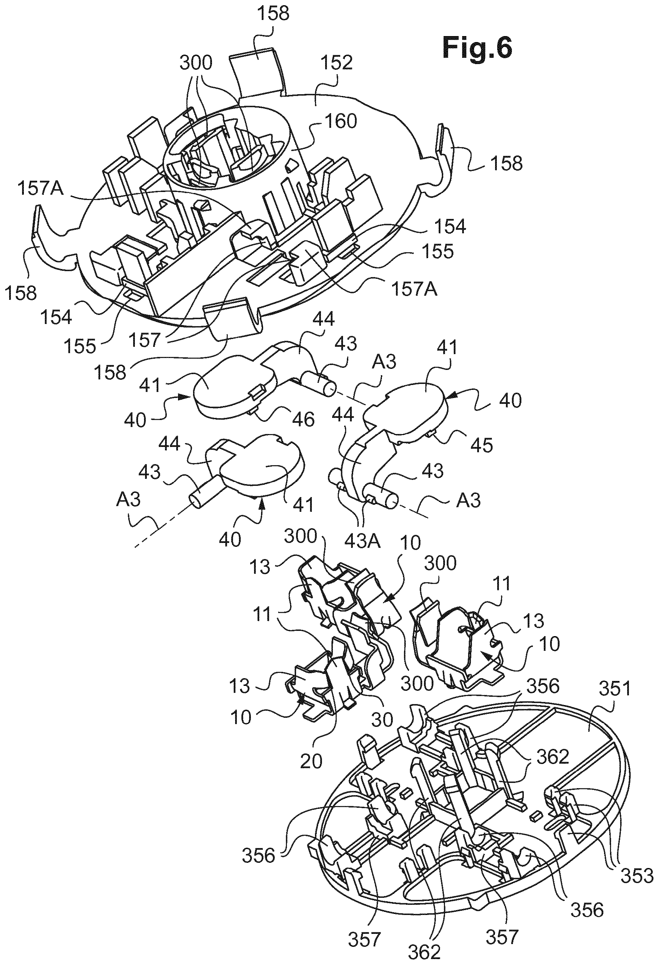

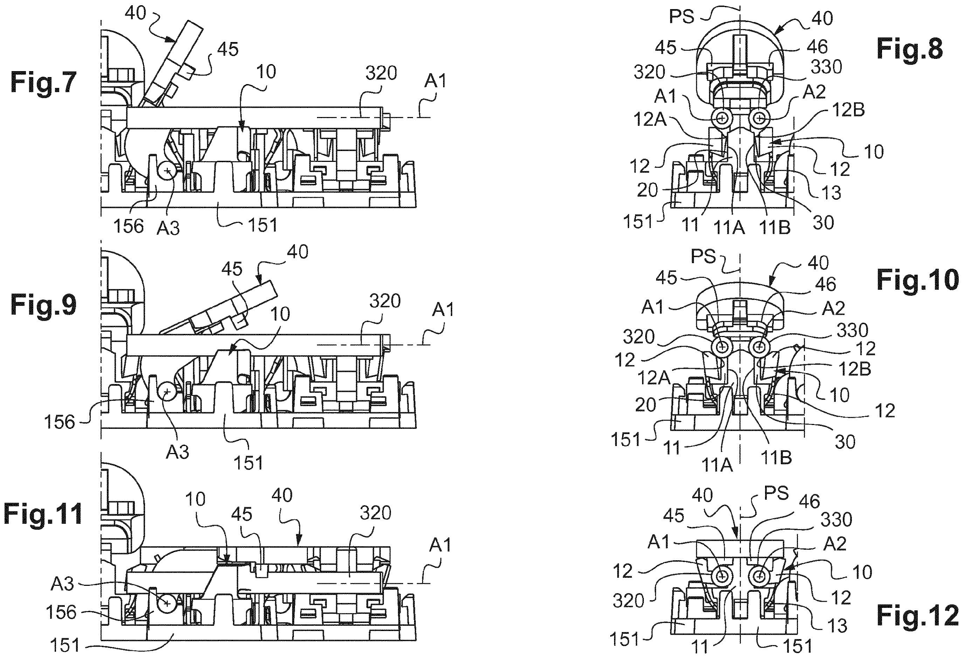

Comme le montrent en particulier les figures 6, 8, 10 et 12, la borne de connexion électrique 1 considérée comporte un corps métallique 10 qui délimite une première fente 20 de réception (figures 8 et 10). Cette première fente 20 est ici rectiligne et s'étend selon une direction longitudinale. Cette première fente 20 est conformée de façon à recevoir un premier fil électrique 320 dans un premier lieu de positionnement orienté selon un premier axe de positionnement A1 qui s'étend globalement perpendiculairement à la direction longitudinale de cette première fente 20.

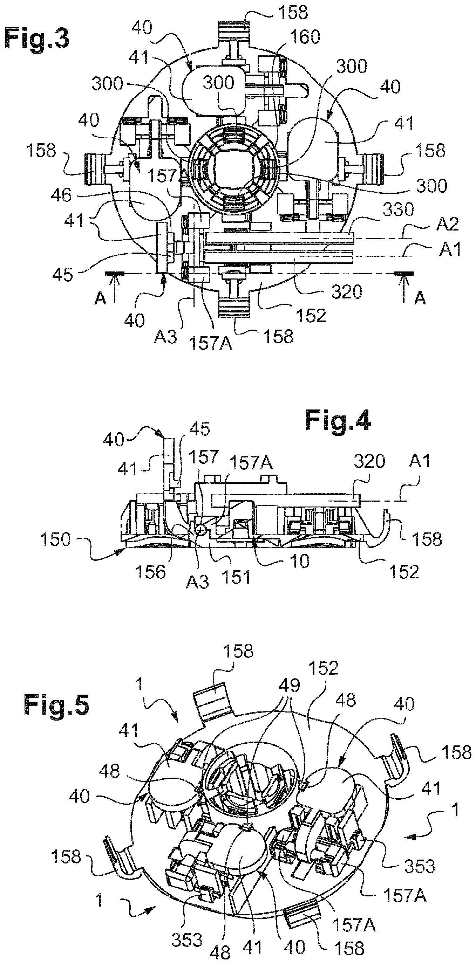

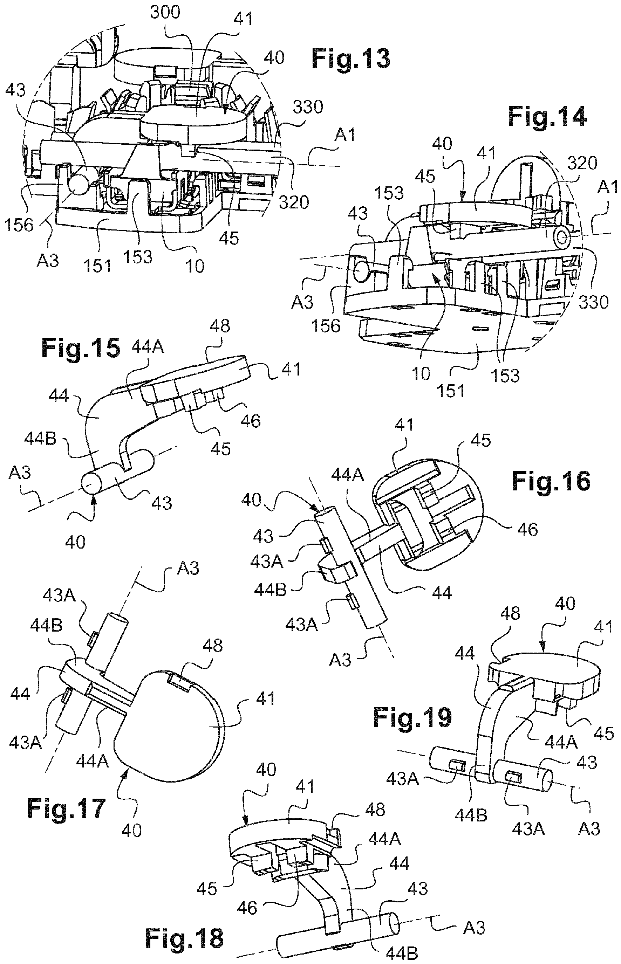

La borne de connexion électrique 1 comporte également un levier de connexion 40 (représenté plus particulièrement sur les figures 15 à 19) qui est monté mobile en basculement par rapport au corps métallique 10 autour d'un axe de bascule A3 sensiblement orthogonal au premier axe de positionnement A1 (voir notamment les figures 3 à 6) et qui porte au moins un moyen d'accostage adapté à exercer une pression sur le premier fil électrique 320 pour sa connexion audit corps métallique 10 (figures 13 et 14). Ce moyen d'accostage comprend ici à cet effet un premier élément d'accostage 45.

Comme le montrent en particulier les figures 8, 10 et 12, selon une caractéristique particulièrement avantageuse, le corps métallique 10 délimite également une deuxième fente 30 de réception qui est conformée de façon à recevoir un deuxième fil électrique 330 dans un deuxième lieu de réception orienté selon un deuxième axe de positionnement A2, ledit deuxième axe de positionnement A2 étant parallèle audit premier axe de positionnement A1 et sensiblement perpendiculaire à la direction longitudinal de la deuxième fente 30 de réception.

Le premier et le deuxième lieu de positionnement sont les lieux théoriques de réception de chaque fil électrique 320, 330 dans la fente 20, 30 correspondante. Ces premier et deuxième lieux de positionnement correspondent ici par exemple aux lieux dans lequel se trouvent ces premier et deuxième fils électriques 320, 330 lorsque ceux-ci sont connectés à la borne de connexion 1, comme représenté sur les figures 5, 6, 11, 12, 13 et 14.

Ladite deuxième fente 30 est également rectiligne. Les directions longitudinales des première et deuxième fentes 20, 30 sont ici sensiblement parallèles.

Le moyen d'accostage dudit levier de connexion 40 comporte alors en outre un deuxième élément d'accostage 46 (figures 6, 8, 10, 12 et 15 à 19) adapté à exercer une pression sur le deuxième fil électrique 330 pour sa connexion audit corps métallique 10 de la borne de connexion 1.

Ici, plus précisément, le corps métallique 10 de la borne de connexion 1 comporte une partie centrale 11 (figures 8, 10 et 12) munie de deux bords longitudinaux parallèles 11A, 11B, et une partie périphérique 13 qui présente deux ailes latérales 12 entourant ladite partie centrale 11 et comportant chacune un bord coupant 12A, 12B (figures 8 et 10) pour trancher la gaine isolante desdits premier et/ou deuxième fils électriques 320, 330.

Chaque partie centrale 11 et périphérique 13 du corps métallique 10 de la borne de connexion 1 est obtenu par découpe et pliage d'un feuillard métallique.

Les bords coupants 12A, 12B peuvent être aiguisés.

Les bords coupants 12A, 12B sont opposés l'un par rapport à l'autre et sont chacun disposé en vis-à-vis de l'un des bords longitudinaux 11A, 11B de la partie centrale 11 du corps métallique 10 de la borne 1, de telle sorte que l'un des bords longitudinaux 11A de la partie centrale 10 délimite avec le bord coupant 12A voisin, disposé en vis-à-vis, ladite première fente 20 de réception, tandis que l'autre des bords longitudinaux 11B de la partie centrale 10 délimite avec l'autre bord coupant 12B voisin, disposé en vis-à-vis, ladite deuxième fente 30 de réception (figures 8 et 10).

Plus précisément, ici, la partie périphérique 13 du corps métallique 10 loge la partie centrale 11 de ce corps métallique 10.

La partie centrale 11 présente la forme d'une languette coudée en L. L'une des branches de ce L porte les bords longitudinaux 11A, 11B décrits précédemment, tandis que l'autre branche est une branche de support rapportée sur ladite partie périphérique 13.

Cette partie périphérique 13 présente une forme en U avec un fond à partir duquel s'élèvent les ailes latérales 12 du corps métallique 10.

La branche de support de la partie centrale 11 du corps métallique 10 est rapportée sur ce fond de la partie périphérique 13 (non visible sur les figures).

Les ailes latérales 12 comportent chacune une portion s'étendant orthogonalement à la partie centrale 11 et une portion recourbée en direction de cette portion centrale 11, dont les extrémités forment lesdits bords coupants 12A, 12B.

La partie centrale 11 de chaque borne de connexion 1 est en outre ici connectée à un alvéole de réception 300 (visible notamment sur les figures 3, 5 et 13) d'une broche de connexion électrique d'un appareil électrique (non représenté ici).

Chaque première et deuxième fente 20, 30 comprend une extrémité d'entrée par laquelle le fil électrique 320, 330 peut être introduit dans la fente de réception correspondante. Cette extrémité d'entrée est évasée de manière à faciliter l'insertion de ce fil électrique 320, 330 (figure 8).

L'autre extrémité des première et deuxième fentes de réception correspond à une extrémité de blocage. Elle comprend des moyens de butée empêchant le fil conducteur de cheminer plus avant dans la fente correspondante.

Chaque fente de réception s'étend sur toute sa longueur de manière rectiligne entre son extrémité d'entrée et son extrémité de blocage.

L'axe de positionnement du lieu de positionnement de chaque fil électrique 320, 330 s'étend ici globalement perpendiculairement à l'axe longitudinal de la fente de réception correspondante, et passe à travers cette fente entre son extrémité d'entrée et son extrémité de blocage.

Comme le montrent l'ensemble des figures en particulier les figures 15 à 19, le levier de connexion 40 comprend ici une partie d'actionnement 41 se présentant sous la forme d'une plaquette munie sur sa face arrière des premiers et deuxième éléments d'accostage 45, 46.

Il comprend également un arbre de pivotement 43 s'étendant selon ledit axe de bascule A3 du levier de connexion 40. Cet arbre de pivotement 43 est monté sur un socle isolant de l'étrier 100, comme décrit plus en détails ultérieurement.

De manière remarquable, selon l'invention, la fente 20, 30 de réception s'étend sur toute sa longueur au-dessus de l'axe de bascule A3 du levier de connexion 40 de sorte que le lieu de positionnement du conducteur électrique 320, 330 s'étend au-dessus de l'axe de bascule A3, quel que soit le degré d'enfoncement de ce conducteur électrique 320, 330 dans la fente 20, 30 de réception.

En d'autres termes, chaque fente 20, 30 de réception dudit corps métallique 10 s'étend sur toute sa longueur entre l'axe de bascule A3 et le moyen d'accostage 45, 46 dudit levier de connexion 40.

Ainsi, si l'on considère que l'axe longitudinal de chaque fente de réception 20, 30 s'étend verticalement et que l'extrémité d'entrée de chaque fente est située vers le haut de la fente, ledit axe de bascule A3 du levier de connexion s'étend en dessous de chaque fente.

Plus précisément, lorsque la fente de réception 20, 30 s'étend verticalement, l'axe de bascule A3 du levier de connexion 40 s'étend dans un plan horizontal situé en dessous de la fente de réception 20, 30.

En d'autres termes, ce plan horizontal contenant l'axe de bascule du levier de connexion est sans aucune intersection avec la fente de réception 20, 30. La fente de réception 20, 30 se situe entièrement d'un même côté de ce plan horizontal comprenant l'axe de bascule A3. Elle se situe plus précisément du côté avant de ce plan, au-dessus de ce plan horizontal, de manière à être accessible à l'installateur.

Ici la dent d'accostage 45, 46 est située au dessus de la fente de réception tant que le levier de connexion 40 est relevé, dans sa position de libération. Lorsque le levier de connexion 40 est dans sa position rabattue de connexion, la dent d'accostage 45, 46 s'étend au niveau de l'extrémité d'entrée de chaque fente de réception 20, 30.

Ainsi, ledit levier de connexion 40 est agencé par rapport audit corps métallique 10 de telle sorte que chaque axe de positionnement A1, A2 des lieux de positionnement des fils électriques 320, 330 s'étend entre ledit axe de bascule A3 du levier de connexion 40 et le moyen d'accostage de ce levier de connexion 40, comprenant ici lesdits les premier et deuxième éléments d'accostage 45, 46.

En d'autres termes, le lieu de positionnement de chaque fil électrique 320, 330 passe entre ledit moyen d'accostage du levier de connexion 40 correspondant et ledit axe de bascule A3 de ce levier de connexion 40.

Le levier de connexion 40 comprend également un montant 44 qui relie ladite partie d'actionnement 41 à l'arbre de pivotement 43.

Ce montant 44 présent une forme coudée à angle droit dont une branche 44A qui s'étend dans le prolongement de la plaquette formant la partie d'actionnement 41 et l'autre branche 44B s'étend sensiblement perpendiculairement à l'axe de bascule A3 de l'arbre de pivotement 43 (figures 15 à 19).

Plus précisément, le montant 44 est un montant central qui s'étend selon un plan de symétrie PS du levier de connexion 40 (figure 8, 10 et 12). Son épaisseur selon une direction perpendiculaire à ce plan de symétrie PS est telle que le montant 44 peut passer entre les lieux de positionnement des fils électriques 320, 330 (figure 1, 2, 3, 5 et 13).

Ainsi, lorsque les fils électriques 320, 330 sont connectés à la borne de connexion 1 considérée, ce montant 44 est avantageusement adapté à être déplacé entre lesdits premier et deuxième conducteurs connectés à ladite borne de connexion.

En pratique, cela implique que cette épaisseur du montant 44 est inférieure ou égale à la distance entre les fentes 20, 30 de la borne de connexion à laquelle il faut soustraire deux fois l'épaisseur de la gaine isolante entourant l'âme conductrice de chaque fil électrique 320, 330 (figure 12).

Le levier de connexion 40 est monté mobile en basculement sur le fond de l'étrier 100, autour de l'axe de bascule A3, entre une position de libération (figures 1 et 2) dans laquelle il laisse accès aux deux fentes 20, 30 de manière à pouvoir y introduire les premier et deuxième fils électriques 320, 330, et une position rabattue (figure 5) dans laquelle il retient les fils électriques 320, 330 dans les fentes 20, 30.

Pour forcer lesdits premier et deuxième fil électrique 320, 330 à s'engager au travers des deux fentes 20, 30 du corps métallique 10 de la borne de connexion 1, les premiers et deuxième éléments d'accostage 45, 46 du moyen d'accostage du levier de connexion 40 se présentent ici sous la forme de deux dents 45, 46 qui font saillie à l'arrière de la plaquette formant la partie d'actionnement 41.

Ces deux dents 45, 46 présentent des bords libres légèrement incurvés de manière à coopérer efficacement avec la gaine desdits fils électriques 320, 330.

En pratique, ici, lorsque le levier de connexion 40 est dans la position rabattue, chacun desdits premier et deuxième éléments d'accostage 45, 46 du levier de connexion 40 s'étend en vis-à-vis de l'extrémité d'entrée de l'une des deux fentes de réception 20, 30 de la borne 1, à proximité de cette extrémité d'entrée.

Ainsi, lorsque les premier et deuxième fils électriques 320, 330 sont engagés au travers des extrémités d'entrée des première et deuxième fentes 20, 30 de réception, et que l'installateur force le levier de connexion 40 à basculer autour de l'axe de bascule A3 vers sa position rabattue, les bords libres des dents 45, 46 correspondantes du levier de connexion 40 viennent accrocher les premier et deuxième fils électriques 320, 330 afin de les forcer à s'engager au travers des cette fentes 20, 30, vers l'extrémité de blocage de de chacune d'entre elles.

Chaque fil électrique 320, 330 est ainsi poussé dans la fente de réception correspondant jusqu'à son lieu de positionnement dans la fente.

Le bord coupant de chaque fente 20, 30 permet simultanément de trancher automatiquement la gaine isolée du fil électrique 320, 330 correspondant et d'établir la connexion électrique entre l'âme conductrice de chaque fil électrique 320 ; 330 et le corps métallique 10 de la borne de connexion 1.

Comme le montrent les figures 2 et 17, le levier de connexion 40 comporte en outre des moyens de blocage en position rabattue (figure 15, 17, 18 et 19).

Ces moyens de blocage se présentent ici sous la forme d'une encoche d'encliquetage 48 (figures 2 et 15 à 19), situées en renfoncement d'un bord de la plaquette formant la partie d'actionnement 41 du levier de connexion 40 et qui est adaptée à s'accrocher à une dent d'accrochage 49 prévue en correspondance sur l'étrier 100 (figure 2). Ces moyens de blocage du levier de connexion et cette dent d'accrochage de l'étrier ne sont pas représentés sur la figure 3.

Enfin, comme cela est visible sur les figures 6, 16, 17 et 19, il est prévu sur l'arbre de pivotement 43 deux ergots 43A qui forment une butée coopérant avec une partie complémentaire du socle 150 de l'étrier 100, qui sera décrite ultérieurement, pour maintenir le levier de connexion en position de libération, dans l'attente de l'insertion du ou des fils électriques.

L'étrier 100 pourra comporter une seule, deux, trois ou quatre bornes de connexion électrique 1 du type précité.

Ici, le premier mode de réalisation de l'étrier 100 représenté sur les figures 1 à 4 et 7 à 14 comporte quatre bornes de connexion électrique 1 de phase, de neutre, de terre ou de phase-coupée, et de commande.

Le deuxième mode de réalisation de l'étrier 100 représenté sur les figures 5 et 6 comporte trois bornes de connexion électrique 1 de phase, de neutre et de terre ou de phase-coupée (pour le cas où le module d'appareillage présente une fonction de va-et-vient).

Comme le montrent les figures 1 et 2, l'étrier 100 comporte un cadre 110 de forme globalement cylindrique, à partir duquel s'élèvent vers l'avant deux bras 130 dont les extrémités libres présentent des moyens d'accrochage 131 au panneau de plâtre.

Le cadre 110 accueille un socle 150 isolant pour les bornes de connexion 1 qui forme le fond de l'étrier 100.

Le cadre 110 comporte à cet effet, à l'arrière, un rebord 140 qui s'étend à angle droit du cadre 110 vers l'intérieur de ce cadre. Le socle 150 est rapporté sur ce rebord 140, à l'intérieur du cadre 110 (figure 1).

Le socle 150 de l'étrier 100 est prévu pour se placer à l'arrière de la boîte électrique 200, de manière à former avec celle-ci un double-fond.

Les bras 130 sont quant à eux prévus pour se placer de part et d'autre de la boîte électrique 200 afin de permettre l'accrochage de l'étrier 100 au panneau de plâtre, indépendamment de la boîte électrique 200.

Le socle 150 comporte ici une double paroi qui accueille lesdites bornes de connexion 1.

Cette double paroi comprend une plaque de support 151 ; 351 sur laquelle sont disposés les corps métalliques 10 des bornes de connexion 1 et une paroi avant 152 qui vient recouvrir la plaque de support 151, 351 (voir figures 1 et 6).

La plaque de support 151, 351 et la paroi avant 152 qui la recouvre délimitent un logement d'accueil et de retenue isolé électriquement pour chaque borne de connexion 1.

La plaque de support 151 ; 351 et la paroi avant 152 comportent chacune une partie principale plane.

Chaque borne de connexion 1 est retenue dans le socle 150 de telle manière que l'axe longitudinal de chaque fente de réception 20, 30 s'étende perpendiculairement à la partie principale plane de la plaque de support 151 ; 351 et de la paroi avant 152.

Les deux modes de réalisation présentés ne diffèrent que par la forme de la plaque de support 151 ; 351 et par le nombre de bornes de connexion logées.

Dans le premier mode de réalisation de l'étrier 100 (figures 1 à 4 et 7 à 14), la plaque de support 151 présente une forme en croix, chaque branche de cette croix supportant une borne de connexion 1. Quatre logements d'accueil et de retenue sont ainsi ménagés entre la plaque de support 151 et la paroi avant 152.

Dans le deuxième mode de réalisation de l'étrier (figures 5 et 6), la plaque de support 351 présente une forme circulaire.

La plaque de support 351 du deuxième mode de réalisation délimite ici, avec la paroi avant correspondante, trois logements d'accueil et de retenue pour bornes de connexion, dont deux premiers sont disposés de manière à être diamétralement opposées, et le troisième est disposé à mi-chemin entre les deux premiers, le long de la périphérie de la plaque de support 351.

La plaque de support 151, 351 comprend des moyens d'accrochage sur la paroi avant 152 de la double paroi de fond, se présentant ici sous la forme de pattes d'encliquetage 153 ; 353 qui s'élèvent vers l'avant à partir de la partie principale plane de la plaque de support 151, 351.

Dans les deux modes de réalisation envisagés ici, les pattes d'encliquetage 153, 353 (figures 2, 5, 6, 13 et 14) sont adaptées à venir s'accrocher sur des moyens d'accrochage complémentaires de la paroi avant 152 à travers des ouvertures traversantes 155 de la partie principale plane de cette paroi avant 152. Ces moyens d'accrochage complémentaires se présentent par exemple sous la forme de nervures 154 (figure 2 et 6) s'étendant en face avant de la paroi avant 152.

Quel que soit le mode de réalisation envisagé, la partie principale plane de la paroi avant 152 est circulaire autour d'un axe principal A10 (figure 1). Elle comporte quatre languettes 158 diamétralement opposées adaptées à coopérer avec le cadre 110 pour assembler le socle 150 à ce cadre 110.

Ici, plus précisément, une partie du corps métallique 10 de chaque borne de connexion 1 est prise en sandwich entre les parties principales planes de la plaque de support 151 ; 351 et la paroi avant 152 du socle 150 et est ainsi maintenue en place. Les logements d'accueil et de retenue des bornes sont ainsi ménagés entre les parties principales planes de la plaque de support et de la paroi avant du socle 150.

En outre, la plaque de support 151, 351 comporte des moyens d'accueil de l'arbre de pivotement 43 du levier de connexion 40, comprenant notamment deux éléments d'accueil 156 ; 356 comportant chacun un logement semi-circulaire adapté à accueillir l'une des extrémités de l'arbre de pivotement 43 (figures 4 et 6).

Ces moyens d'accueil comprennent également ici des éléments de maintien 357 accolés à chaque logement semi-circulaire et adaptés à coopérer avec l'ergot 43A correspondant de l'arbre de pivotement 43 du levier de connexion 40.

Plus précisément, ici, chaque élément de maintien 357 comprend une nervure formant lesdits moyens complémentaires qui coopèrent avec l'ergot 43A de l'arbre de pivotement 43 du levier de connexion 40 pour bloquer le levier de connexion dans sa position de libération. Cette nervure forme en effet un passage de point dur lors du basculement du levier de connexion 40 de la position de libération vers la position rabattue.

Ainsi, en l'absence d'action de l'installateur, chaque ergot 43A reste en butée contre la nervure de l'élément de maintien 357 correspondant, et le levier de connexion reste en position de libération, de manière à ce que l'accès au corps métallique de la borne de connexion reste dégagé.

La paroi avant 152 comporte, en correspondance avec les moyens d'accueil de l'arbre de pivotement 43 du levier de connexion 40 ménagés dans la plaque de support 151 ; 351, des renfoncements 157 dans sa face arrière, qui sont adaptés à loger au moins partiellement les moyens d'accueil de l'arbre de pivotement 43 et l'arbre de pivotement 43 lui-même. Ce renfoncement 157 est en effet délimité par une partie 157A de la paroi avant 152 qui vient recouvrir l'extrémité de l'arbre de pivotement accueillie dans le logement semi-circulaire des moyens d'accueil de la plaque de support 151 ; 351 (figure 4).

L'arbre de pivotement 43 du levier de connexion 40 est ainsi retenu par la partie 157A de la paroi avant 152 sur les moyens d'accueil de la plaque de support 151 ; 351. Il est adapté à pivoter dans ces moyens d'accueil. Chaque arbre de pivotement 43 s'étend ici parallèlement à la partie principale des plaques support 151 ; 351 et paroi avant 152 du socle 150.

Cette paroi avant 152 comporte en outre une ouverture circulaire centrale bordée par une cloison cylindrique 160 qui s'élève vers l'avant à partir de sa partie principale plane.

Cette cloison cylindrique 160 isole extérieurement les alvéoles de réception 300 associé à chaque borne de connexion 1.

Du côté intérieur, proche de l'axe principal A10 de la paroi avant 152, les alvéoles sont isolées par des cloisons 161 droites qui s'élèvent également à partir de la paroi avant 152 (figures 1, 2 et 6). Des pattes d'accrochage 162 ; 362 (figures 2 et 6) s'élèvent à partir d'une partie centrale de la plaque de support 151 ; 351 et viennent s'accrocher du côté intérieur de la cloison cylindrique 160, dans des logements complémentaires prévus à cet effet.

Le cadre 110 est bordé à l'avant par une tranche avant périphérique 112 adapté à venir en appui contre la boîte électrique 200 (figure 1).

Les deux bras 130 s'étendent à partir de cette tranche avant périphérique 112 du socle 110, dans le prolongement de cette tranche avant périphérique 112. Ils s'étendent dans des directions parallèles à l'axe principal A10, en position diamétralement opposée (figures 1 et 2).

Les extrémités libres de ces deux bras 130 sont recourbées vers l'extérieur, de manière à former des rebords 131 qui sont ainsi adaptés à s'appuyer contre la face avant du panneau de plâtre.

Le cadre 110 présente en outre au moins une ouverture d'entrée 113 (figure 2), qui permet le passage des fils électriques 320, 330 depuis l'extérieur vers l'intérieur du socle 110. Il est prévu ici une seule ouverture 113.

Cette ouverture d'entrée 113 (figure 2) est bordée à l'extérieur d'un manchon 114 accueillant deux tubes qui permettent de retenir l'extrémité d'une gaine de cheminement de câbles par rapport à l'étrier 100.

Dans l'exemple représenté sur la figure 1, les bornes de connexion électrique 1 sont réparties en croix et sont disposées dans le socle 150 de telle manière que les premiers et deuxièmes axes de positionnement A1, A2 de toutes les bornes de connexion électrique 1 sont inclinés à 45 degrés par rapport à l'axe d'entrée du manchon 114.

Grâce à la disposition décrite précédemment, lorsque le levier de connexion est dans sa position de libération, l'accès aux fentes de réception de la borne de connexion est largement ouvert (voir figures 1 à 4).

Comme représenté sur les figures 1, 5 et 6, les lieux de positionnement des fils électriques traversent ici les bornes de connexion 1.

Ainsi, il est notamment possible de faire passer les fils électriques 320, 330 de part et d'autre du montant 44 du levier de connexion 40.

Les fils électrique 320, 330 peuvent ainsi traverser entièrement la borne de connexion 1 correspondante.

Il est également possible d'envisager de faire cheminer chaque fil électrique jusqu'à la fente 20, 30 correspondante par un côté ou l'autre côté de la borne de connexion 1. En d'autre terme, le fil électrique 320, 330 s'étend pour sa connexion le long des premier et deuxième axes de positionnement A1, A2, dans n'importe quel sens le long de la direction de cet axe.

Ici, le levier de connexion 40 ne borne pas le lieu de positionnement des fils électriques. Il ne constitue pas une butée pour les fils électriques introduits dans la borne de connexion 1.

La position relative des bornes de connexion électrique 1 par rapport à l'ouverture d'entrée 113 des fils électriques est par ailleurs choisie de telle manière qu'il ne soit pas nécessaire d'exagérément replier les premiers fils électriques 320 afin de les engager au travers des fentes 20, 30 des bornes de connexion électrique 1.

Comme le montre la figure 1, la boîte électrique 200 comporte quant à elle une paroi latérale 201 tubulaire de révolution autour d'un axe central A11, qui est fermée à l'arrière par un fond 202 et qui est ouverte vers l'avant. La boîte électrique 200 délimite ainsi un logement intérieur d'accueil d'un module d'appareillage.

Un tel module d'appareillage se présente sous la forme d'un boîtier (de taille identique à celle du logement intérieur délimité par la boîte électrique 200) qui loge intérieurement un mécanisme électrique de manière à pouvoir assurer une fonction électrique quelconque, par exemple d'interrupteur ou de prise de courant. Un tel module d'appareillage est conçu pour se fixer directement au corps, sans l'aide d'un quelconque support d'appareillage.

La boîte électrique 200 comporte alors des moyens d'assujettissement de ce module d'appareillage, qui se présentent ici sous la forme de quatre fenêtres 203 régulièrement réparties sur le pourtour de la paroi latérale 201, dans lesquelles peuvent s'accrocher des moyens d'encliquetage prévus sur le module d'appareillage (figure 1).

Pour sa connexion aux alvéoles 300 des bornes de connexion électrique 1, le module d'appareillage (non représenté) comporte à l'arrière des broches.

Pour permettre aux broches du module d'appareillage de se connecter à ces alvéoles 300, le fond 202 de la boîte électrique 200 présente une ouverture d'accès centrale, au travers de laquelle ces broches peuvent s'engager.

Cette ouverture d'accès peut être initialement fermée par un opercule détachable (non visible sur les figures).

Pour sa fixation dans l'ouverture circulaire pratiquée dans le panneau de plâtre, la boîte électrique 200 comporte un trottoir extérieur 205 (figure 1) qui longe extérieurement le bord de l'ouverture avant de sa paroi latérale 201 et qui est adapté à prendre appui contre la face avant du panneau de plâtre, autour de l'ouverture circulaire ménagée dans le panneau de plâtre. Ainsi ce trottoir extérieur 205 permet-il de bloquer la boîte électrique 200 vers l'arrière.

Pour son blocage vers l'avant, la boîte électrique 200 comporte quatre volets 206 rectangulaires découpés dans sa paroi latérale 201 de telle manière qu'ils se rattachent à celle-ci uniquement par leurs bords avant, ce dernier formant alors une sorte de charnière.

Une couche de matière souple (en SEBS - « polystyrène-b-poly(éthylène-butylène)-b-polystyrène ») est surmoulée sur une partie de la face extérieure de la paroi latérale 201, notamment sur chaque volet 206. Cette couche de matière souple est conformée de telle manière que chaque volet 206 porte sur sa face extérieure des nervures parallèles souples 207 (figure 1).

Chaque volet 206 est ainsi libre de s'escamoter vers l'intérieur de la boîte électrique 200 lors de l'engagement de celle-ci au travers de l'ouverture circulaire prévue dans le panneau de plâtre, puis de revenir vers sa position initiale de manière que ses nervures parallèles souples 207 puissent s'accrocher à la face arrière du panneau de plâtre. Les volets 206 sont ensuite bloqués dans cette position par le module d'appareillage lui-même, qui est conçu pour remplir complètement l'intérieur de la boîte électrique 200 de manière à repousser les volets 206 vers l'extérieur.

Pour permettre de rapporter l'étrier 100 à l'arrière de la boîte électrique 200, la paroi latérale 201 de cette boîte électrique 200 présente, en creux dans sa face extérieure, deux rainures 208 dont les dimensions sont ajustées à celles des bras 130 de l'étrier 100, pour permettre le passage de ces derniers. On observe également sur la figure 1 que le trottoir extérieur 205 de la boîte électrique 200 est interrompu dans le prolongement de ces deux rainures 208, pour permettre le passage des rebords 131 des bras 130 de l'étrier 100.

On peut exposer en détail la mise en place et la connexion de la boîte électrique 200 et de l'étrier 100 dans la cloison creuse.

Initialement, une ouverture circulaire est pratiquée à la scie cloche dans le panneau de plâtre de la cloison creuse, de telle manière que les extrémités libres de deux gaines de cheminement puissent être tirées à l'extérieur de la cloison creuse, au travers de cette ouverture circulaire.

Les extrémités des fils électriques 320, 330 sortant de ces gaines de cheminement sont alors engagées au travers des deux tubes rapportés sur le manchon 114 de l'étrier 100.

Les extrémités des deux gaines de cheminement sont ensuite bloquées dans ces tubes par encliquetage.

Après avoir soulevé les leviers de connexion 40 (voir figure 1) par leur partie d'actionnement 41, l'installateur positionne les premiers et deuxièmes fils électriques 320, 330 au travers des fentes 20, 30 correspondantes des bornes de connexion électrique 1, puis il rabat les leviers de connexion 40 en poussant sur la partie d'actionnement 41, de manière à connecter ces fils électriques 320, 330 aux bornes de connexion électrique 1.

Ce positionnement est ici particulièrement aisé puisque les fils électriques 320, 330 passent au dessus de l'arbre de pivotement 43 du levier de connexion 40.

L'étrier 100 est ensuite mis en place au travers de l'ouverture circulaire pratiqué dans le panneau de plâtre, tout d'abord en l'y engageant par son côté duquel émerge les tubes, puis en le faisant basculer.

L'étrier 100 est considéré en place lorsque les rebords 131 des bras 130 sont en appui contre la face avant du panneau de plâtre.

Reste alors pour l'installateur à engager la boîte électrique 200 au travers de l'ouverture circulaire pratiquée dans le panneau de plâtre, ce qui est fait sans difficulté grâce aux rainures 208 prévues en creux dans la face externe de sa paroi latérale 201 (qui coulissent le long des bras 130 de l'étrier 100).

La boîte électrique 200 est ainsi parée à accueillir le module d'appareillage.

On pourra par exemple prévoir de monter le levier de connexion non pas sur le socle de l'étrier, mais sur le corps métallique de la borne de connexion électrique.

Selon une autre variante, on pourra prévoir d'utiliser l'étrier avec une boîte de forme différente de celle représentée sur la figure 1. Cette boîte pourra par exemple comporter sur la face intérieure de sa paroi latérale des puits de vissage, qui permettront de fixer un support d'appareillage en forme de cadre contre le bord avant de la boîte. Ainsi, cette boîte permettra d'accueillir un mécanisme électrique, du type à encliqueter dans le support d'appareillage. Dans cette variante, on prévoira que les bornes de connexion électrique de l'étrier comprennent un alvéole de réception et que le mécanisme électrique comporte des broches adaptées à s'engager au travers de ces alvéoles des bornes de connexion électrique de l'étrier.

Il est prévu de préférence que le moyen d'accostage comprenne deux éléments d'accostage de manière à agir sur deux fils électriques introduits dans la borne de connexion selon l'invention. Cependant, on peut prévoir que le moyen d'accostage ne comprenne qu'un élément d'accostage, notamment dans le cas où la borne de connexion ne présente qu'une seule fente et accueille un seul fil électrique.

## Revendications

1. Borne de connexion électrique (1) comportant :
- un corps métallique (10) délimitant au moins une fente (20, 30) de réception conformée de façon à recevoir un conducteur électrique (320, 330) dans un lieu de positionnement, correspondant au lieu théorique d'accueil du conducteur électrique, orienté selon un axe de positionnement (A1, A2), et
- un levier de connexion (40) qui est monté mobile en basculement par rapport au corps métallique (10) autour d'un axe de bascule (A3) s'étendant sensiblement orthogonalement à cet axe de positionnement (A1, A2) et qui porte au moins un moyen d'accostage (45, 46) adapté à exercer une pression sur ce conducteur électrique (320, 330) pour sa connexion audit corps métallique (10),
**caractérisée en ce que** la fente (20, 30) de réception s'étend sur toute sa longueur au-dessus de l'axe de bascule (A3) du levier de connexion (40) de sorte que le lieu de positionnement du conducteur électrique (320, 330) s'étend au-dessus de l'axe de bascule (A3), quel que soit le degré d'enfoncement de ce conducteur électrique (320, 330) dans la fente (20, 30) de réception.

2. Borne de connexion électrique (1) selon la revendication 1, dans laquelle ledit levier de connexion (40) comporte un montant (44) qui relie une partie d'actionnement (41) de ce levier de connexion (40) comprenant ledit moyen d'accostage (45, 46) à un arbre de pivotement (43) s'étendant selon ledit axe de bascule (A3) du levier de connexion (40).

3. Borne de connexion électrique (1) selon l'une des revendications précédentes, dans laquelle ledit corps métallique (10) délimite en outre une autre fente (20, 30) de réception conformée de façon à recevoir un autre conducteur électrique (320 , 330) dans un autre lieu de positionnement orienté selon un autre axe de positionnement (A1, A2), et dans laquelle ledit moyen d'accostage (45, 46) est adapté à exercer une pression sur cet autre conducteur électrique (320, 330) pour sa connexion audit corps métallique (10).

4. Borne de connexion électrique (1) selon les revendications 2 et 3, dans laquelle ledit montant (44) du levier de connexion (40) est adapté à être déplacé entre les lieux de positionnements desdits conducteurs (320, 330).

5. Borne de connexion électrique (1) selon la revendication 3, dans laquelle le corps métallique (10) comporte une partie centrale (11) comportant deux bords longitudinaux (11A, 11B) parallèles, entourée par deux ailes latérales (12) dont les bords opposés (12A, 12B) sont disposés en vis-à-vis des bords longitudinaux (11A, 11B) de la partie centrale (11) et sont coupants pour trancher la gaine isolante de chaque conducteur électrique (320, 330) reçu dans cette borne.

6. Appareillage électrique (100) comportant un socle isolant (150) et au moins une borne de connexion électrique (1) selon l'une des revendications précédentes, qui est fixée audit socle isolant (150).

7. Appareillage électrique (100) selon la revendication précédente, dans lequel le levier de connexion (40) de chaque borne de connexion (1) est monté mobile sur ledit socle (150) isolant.

8. Appareillage électrique (100) selon l'une des revendications 6 et 7, dans lequel ledit socle (150) comporte une plaque de support (151 ; 351) et une paroi avant (152) qui délimitent entre elles des logements d'accueil et de retenue desdites bornes de connexion électrique (1).

9. Appareillage électrique (100) selon la revendication précédente, dans lequel ladite plaque de support (151 ; 351) et ladite paroi avant (152) délimitent entre elles un logement d'accueil et de retenue d'un arbre de pivotement (43) du levier de connexion (40).

10. Appareillage électrique (100) selon l'une des deux revendications précédentes, dans lequel ladite plaque de support (151 ; 351) comporte des moyens d'accrochage (153 ;353) sur la paroi avant (152) du socle (150).

11. Appareillage électrique (100) selon l'une des revendications 8 à 10, dans lequel ladite paroi avant (152) du socle (150) est rapportée à l'arrière d'un cadre (110) comportant deux bras (130) qui s'étendent vers l'avant pour la fixation dudit appareillage électrique (100) à l'arrière d'une boîte (200) adaptée à recevoir à l'avant un mécanisme électrique.

## Patentansprüche

1. Elektrische Verbindungsklemme (1) mit
- einem Körper (10) aus Metall, der wenigstens einen Aufnahmeschlitz (20, 30) begrenzt, der dazu ausgebildet ist, einen elektrischen Leiter (320, 330) an einem Positionierungsort aufzunehmen, der dem theoretischen Aufnahmeort des elektrischen Leiters entspricht und einer Positionierungsachse (A1, A2) gemäß ausgerichtet ist, und
- einem Verbindungshebel (40), der gegenüber dem Körper (10) aus Metall um eine sich rechtwinklig zur Positionierungsachse (A1, A2) erstreckende Kippachse (A3) kipphebelartig beweglich angebracht ist und der wenigstens ein Mittel (45, 46) zum Andrücken aufweist, das dazu ausgelegt ist, auf den elektrischen Leiter (320, 330) für dessen Verbindung mit dem Körper (10) aus Metall einen Druck auszuüben,
**dadurch gekennzeichnet, daß** sich der Aufnahmeschlitz (20, 30) über seine gesamte Länge oberhalb der Kippachse (A3) des Verbindungshebels (40) erstreckt, damit sich der Positionierungsort des elektrischen Leiters (320, 330) oberhalb der Kippachse (A3) erstreckt, wie weit auch der elektrische Leiter (320, 330) in den Aufnahmeschlitz (20, 30) eindringen mag.

2. Elektrische Verbindungsklemme (1) gemäß Anspruch 1, bei der der Verbindungshebel (40) eine Strebe (44) aufweist, die einen das Andrückmittel (45, 46) aufweisenden Betätigungsteil (41) des Verbindungshebels (40) mit einer sich der Kippachse (A3) des Verbindungshebels (40) gemäß erstreckenden Schwenkachse (43) verbindet.

3. Elektrische Verbindungsklemme (1) gemäß einem der vorangehenden Ansprüche, bei der der Körper (10) aus Metall außerdem einen weiteren Schlitz (20, 30) begrenzt, der dazu ausgebildet ist, einen weiteren elektrischen Leiter (320, 330) an einem weiteren Positionierungsort aufzunehmen, der einer weiteren Positionierungsachse (A1, A2) gemäß ausgerichtet ist, und bei der das Mittel (45, 46) zum Andrücken dazu ausgelegt ist, auf den weiteren elektrischen Leiter (320, 330) für dessen Verbindung mit dem Körper (10) aus Metall einen Druck auszuüben.

4. Elektrische Verbindungsklemme (1) gemäß den Ansprüchen 2 und 3, bei der die Strebe (44) des Verbindungshebels (40) dazu ausgelegt ist, zwischen den Positionierungsorten der besagten Leiter (320, 330) bewegt zu werden.

5. Elektrische Verbindungsklemme (1) gemäß Anspruch 3, bei der der Körper (10) aus Metall einen mittleren Teil (11) aufweist, der zwei parallele Längsränder (11A, 11B) aufweist und von zwei seitlichen Flügeln (12) umgeben ist, deren gegenüberliegende Ränder (12A, 12B) gegenüber den Längsrändern (11A, 11B) des mittleren Teils (11) angeordnet sind und die scharf sind, um die Isolationshülle jedes in dieser Klemme aufgenommenen elektrischen Leiters (320, 330) zu zertrennen.

6. Elektrisches Gerät (100), das einen isolierenden Sockel (150) und wenigstens eine elektrische Verbindungsklemme (1) gemäß einem der vorangehenden Ansprüche, die an dem isolierenden Sockel (150) befestigt ist, aufweist.

7. Elektrisches Gerät (100) gemäß dem vorangehenden Anspruch, bei dem der Verbindungshebel (40) jeder Verbindungsklemme (1) an dem isolierenden Sockel (150) beweglich angebracht ist.

8. Elektrisches Gerät (100) gemäß einem der Ansprüche 6 und 7, bei dem der Sockel (150) eine Trägerplatte (151; 351) und eine vordere Wandung (152) aufweist, die zwischen sich Räume zum Aufnehmen und Festhalten der elektrischen Verbindungsklemmen (1) begrenzen.

9. Elektrisches Gerät (100) gemäß dem vorangehenden Anspruch, bei dem die Trägerplatte (151; 351) und die vordere Wandung (152) zwischen sich einen Raum zum Aufnehmen und Festhalten einer Schwenkachse (43) des Verbindungshebels (40) begrenzen.

10. Elektrisches Gerät (100) gemäß einem der beiden vorangehenden Ansprüche, bei dem die Trägerplatte (151; 351) Mittel zum Andrücken (153; 353) an die vordere Wandung (152) des Sockels (150) aufweist.

11. Elektrisches Gerät (100) gemäß einem der Ansprüche 8 bis 10, bei dem die vordere Wandung (152) des Sockels (150) an der Rückseite eines Rahmens (110) angebracht ist, der zwei Arme (130) aufweist, die sich zum Befestigen des elektrischen Geräts (100) an der Rückseite eines Kastens (200), der dazu ausgelegt ist, vorne einen elektrischen Mechanismus aufzunehmen, nach vorne erstrecken.

## Claims

1. An electrical connection terminal (1) comprising:
• a metal body (10) that defines at least one reception slot (20, 30) that is shaped so as to receive an electrical conductor (320, 330) in a positioning location that corresponds to the theoretical location for receiving the electrical conductor, oriented along a positioning axis (A1, A2); and
• a connection lever (40) that is movably mounted to tilt relative to the metal body (10) about a tilt axis (A3) that extends substantially orthogonally to the positioning axis (A1, A2), and that carries docking means (45, 46) adapted to exert pressure on the electrical conductor (320, 330) so as to connect it to said metal body (10);
the electrical connection terminal being **characterized in that** the entire length of the reception slot (20, 30) extends above the tilt axis (A3) of the connection lever (40) so that the positioning location of the electrical conductor (320, 330) extends above the tilt axis (A3), regardless of the degree to which the electrical conductor (320, 330) is pushed into the reception slot (20, 30).

2. An electrical connection terminal (1) according to claim 1, wherein said connection lever (40) includes a limb (44) that connects an actuator portion (41) of the connection lever (40) having said docking means (45, 46), to a pivot pin (43) that extends along said tilt axis (A3) of the connection lever (40).

3. An electrical connection terminal (1) according to any preceding claim, wherein said metal body (10) also defines another reception slot (20, 30) that is shaped so as to receive another electrical conductor (320, 330) in another positioning location that is oriented along another positioning axis (A1, A2), and wherein said docking means (45, 46) are adapted to exert pressure on this other electrical conductor (320, 330) so as to connect it to said metal body (10).

4. An electrical connection terminal (1) according to claim 2 and claim 3, wherein said limb (44) of the connection lever (40) is adapted to be moved between the positioning locations of said conductors (320, 330).

5. An electrical connection terminal (1) according to claim 3, wherein the metal body (10) includes a central portion (11) with two parallel longitudinal edges (11A, 11B) that are bordered by two side flanges (12) having opposite edges (12A, 12B) that are arranged facing the longitudinal edges (11A, 11B) of the central portion (11) and that are sharp so as to cut the insulating sheath of each electrical conductor (320, 330) that is received in the terminal.

6. An electrical accessory (100) including an insulating base (150) and at least one electrical connection terminal (1) according to any preceding claim, fastened to said insulating base (150).

7. An electrical accessory (100) according to the preceding claim, wherein the connection lever (40) of each connection terminal (1) is movably mounted on said insulating base (150).

8. An electrical accessory (100) according to claim 6 or claim 7, wherein said base (150) comprises a support plate (151; 351) and a front wall (152) that define between them housings for receiving and holding said electrical connection terminals (1).

9. An electrical accessory (100) according to the preceding claim, wherein said support plate (151; 351) and said front wall (152) define between them a housing for receiving and holding a pivot pin (43) of the connection lever (40).

10. An electrical accessory (100) according to one of the two preceding claims, wherein said support plate (151; 351) includes fastener means (153; 353) on the front wall (152) of the base (150).

11. An electrical accessory (100) according to any one of claims 8 to 10, wherein said front wall (152) of the base (150) is fitted to the rear of a frame (110) that includes two arms (130) that extend forward so as to fasten said electrical accessory (100) to the rear of a casing (200), the front of which is adapted to receive an electrical mechanism.
